# EUROPEAN PATENT APPLICATION

(11) **EP 3 608 073 A2**
(43) Date of publication of application: **12.02.2020**
(21) Application number: 19191124.7
(22) Date of filing: 09.08.2019
(51) Int. Cl.: B27B 17/12, F02B 63/02, F16N 7/38, F02M 37/00, F02M 37/06, F01M 3/00, B65D 37/00, B67D 7/00, F01M 11/00

(54) **FUEL CONTAINER AND POWER WORK EQUIPMENT**

(30) Priority: 10.08.2018 JP 2018151278
(71) Applicant: Yamabiko Corporation, Ohme-shi Tokyo 198-8760 (JP)
(72) Inventor: OKADA, Hirotaka, Ohme-shi, Tokyo 1988760 (JP); ETO, Kuniyoshi, Ohme-shi, Tokyo 1988760 (JP)
(74) Representative: Dehns

(57) **Abstract**

Provided is power work equipment using a fuel container and/or a lubricating oil container that is/are easily replaced for the power work equipment, and supply(ies) liquid fuel and/or lubricating oil optimized for driving. A chainsaw (1A) (power work equipment) includes a main body (10) having an internal combustion engine (50), and a fuel container (90A) and/or a lubricating oil container (100A) detachably attached to the main body (10). A connection part (92) of the fuel container (90A) is connected with the fuel suction unit (60) in a liquid-tight manner, and a bag (91) is configured to collapse as liquid fuel (F) in the bag (91) decreases. A connection part (102) of the lubricating oil container (100A) is connected with a lubricating-oil suction unit (70) in a liquid-tight manner, and a bag (101) is configured to collapse as lubricating oil (L) in the bag (101) decreases.

## Description

### TECHNICAL FIELD

The present invention relates to a fuel container and power work equipment.

### BACKGROUND OF THE INVENTION

Power work equipment, such as a brush cutter, a chainsaw, a hedge trimmer, and a blower, typically includes a main body having an internal combustion engine and a metallic fuel container storing liquid fuel, wherein the fuel container is detachably attached to the main body (see Patent Document 1, for example).

### PRIOR ART DOCUMENT

### Patent Document

Patent Document 1: Japanese Patent Application Publication No. H10-274120

### SUMMARY OF THE INVENTION

### Problems to be solved

Once liquid fuel in a sealed fuel container decreases to have a negative pressure in the fuel container, the pump of an internal combustion engine is unable to pump up the liquid fuel any more. Therefore, the above-described conventional power work equipment is provided with a hose to communicate between inside and outside of the fuel container, in order to prevent the fuel container from having a negative pressure therein. This configuration has a problem that the hose must be fixed to a replacing fuel container when the fuel container is replaced, to make the replacement work complicated.

The present invention is intended to provide a fuel container that is easily replaced for power work equipment to solve the above-identified problems, and supplies liquid fuel having optimum properties for an internal combustion engine of the power work equipment. In addition, the present invention is intended to provide power work equipment that has its fuel container and/or its lubricating oil container easily replaced to solve the above-identified problems, and is supplied with liquid fuel and/or lubricating oil optimized for driving.

### Solution to Problems

A first aspect of the invention provides a fuel container used for storing liquid fuel to be supplied to an internal combustion engine, including a bag that is flexible and configured to store the liquid fuel. The bag is provided with a connection part to be connected to a fuel suction unit of the internal combustion engine. The bag has the connection part connected with the fuel suction unit in a liquid-tight manner, and is configured to collapse as the liquid fuel in the bag decreases.

A second aspect of the invention provides power work equipment including a main body having an internal combustion engine, and a fuel container detachably attached to the main body. The fuel container includes a flexible bag to store liquid fuel to be supplied to the internal combustion engine. The bag is provided with a connection part to be connected to a fuel suction unit of the internal combustion engine. The bag has the connection part connected with the fuel suction unit in a liquid-tight manner, and is configured to collapse as the liquid fuel in the bag decreases.

A third aspect of the invention provides power work equipment including a main body having a drive source, and a lubricating oil container detachably attached to the main body. The lubricating oil container includes a flexible bag to store lubricating oil for lubricating a sliding portion of the power work equipment. The bag is provided with a connection part to be connected to a lubricating-oil suction unit of the drive source. The bag has the connection part connected with the lubricating-oil suction unit in a liquid-tight manner, and is configured to collapse as the lubricating oil in the bag decreases.

According to the first and second aspects of the invention, the fuel container is attached to the power work equipment to supply the liquid fuel to the internal combustion engine, and is replaced with new one when the liquid fuel in the fuel container runs out, allowing a user to have no messy hands for supplying fuel to the internal combustion engine. According to the third aspect of the invention, the lubricating oil container is attached to the power work equipment to supply the lubricating oil to the sliding portion, and is replaced with new one when the lubricating oil in the lubricating oil container runs out, allowing a user to have no messy hands for resupplying lubricating oil to the sliding portion.

According to the present invention, the bag internally contracts as the liquid fuel or lubricating oil in the bag decreases, making the bag collapsed to prevent the bag from having negative pressure therein. Therefore, there is no need to set a part for the communication between inside and outside of the bag when a fuel container or a lubricating oil container is attached to power work equipment, allowing for easy replacement of the fuel container or the lubricating oil container.

According to the first and second aspects of the invention, the fuel container can be produced and sold separately, so that the fuel container is filled with the liquid fuel having the properties compatible with the internal combustion engine so as to be supplied to the user. This allows the internal combustion engine to be driven with the liquid fuel having the optimum properties. According to the third aspect of the invention, the lubricating oil container can be produced and sold separately, so that the lubricating oil container is filled with the lubricating oil suitable for the sliding portion of the power work equipment and the work so as to be supplied to the user. This allows the power work equipment to be driven with the optimum lubricating oil.

According to the present invention, the bag is deformed while the sealed state is maintained, to let liquid fuel or lubricating oil less likely to be evaporated.

### Advantageous Effects of the Invention

The fuel container of the present invention is easily replaced for the power work equipment, and supplies the liquid fuel having the optimum properties for the internal combustion engine. The power work equipment of the present invention allows the fuel container or the lubricating oil container to be easily replaced, and is supplied with the liquid fuel or the lubricating oil optimized for driving.

### BRIEF DESCRIPTION OF DRAWINGS

FIG. 1 is a diagram showing a schematic structure of a chainsaw according to a first embodiment of the present invention, in a side view when the chainsaw is not operated or when the chainsaw is vertically cutting an object to be cut;
FIG. 2 is a side view of the chainsaw according to the first embodiment of the present invention, to show a state that liquid fuel in a fuel container and lubricating oil in a lubricating oil container have decreased;
FIG. 3 is a side view of the chainsaw, having another configuration, according to the first embodiment of the present invention;
FIG. 4 is a diagram showing, in a plan view, a schematic structure of a hedge trimmer according to a second embodiment of the present invention;
FIG. 5 is a diagram showing, in a side view, a schematic structure of a brush cutter according to a third embodiment of the present invention;
FIG. 6 is a diagram showing, in a side view, another schematic structure of the brush cutter according to the third embodiment of the present invention;
FIG. 7 is a diagram showing, in a side view, still another schematic structure of the brush cutter according to the third embodiment of the present invention;
FIG. 8 is a diagram showing, in a side view, a schematic structure of a brush cutter according to a fourth embodiment of the present invention;
FIG. 9 is a side view of a fuel container according to a fifth embodiment of the present invention; and
FIG. 10 is a side view of a lubricating oil container according to the fifth embodiment of the present invention.

### EMBODIMENTS OF THE INVENTION

Embodiments of the present invention will be described in detail by way of example only and with reference to the drawings as appropriate. Note that the same components in respective embodiments will be denoted by the same reference numerals and duplicate descriptions thereof will be omitted.

In the following description, an up-down direction, a front-rear direction, and a right-left direction of power work equipment are set for the purpose of illustration of a fuel container and the power work equipment of the embodiments, and is not intended to limit the configurations of the fuel container and the power work equipment of the present invention.

Additionally, in the following descriptions, the state when the power work equipment is not operated refers to a state when the power work equipment is placed on the ground or a floor during the time of the power work equipment being activated or kept in storage.

### First Embodiment

In a first embodiment, a description will be given of a chainsaw 1A that has a fuel container of the present invention applied thereto, and embodies power work equipment of the present invention.

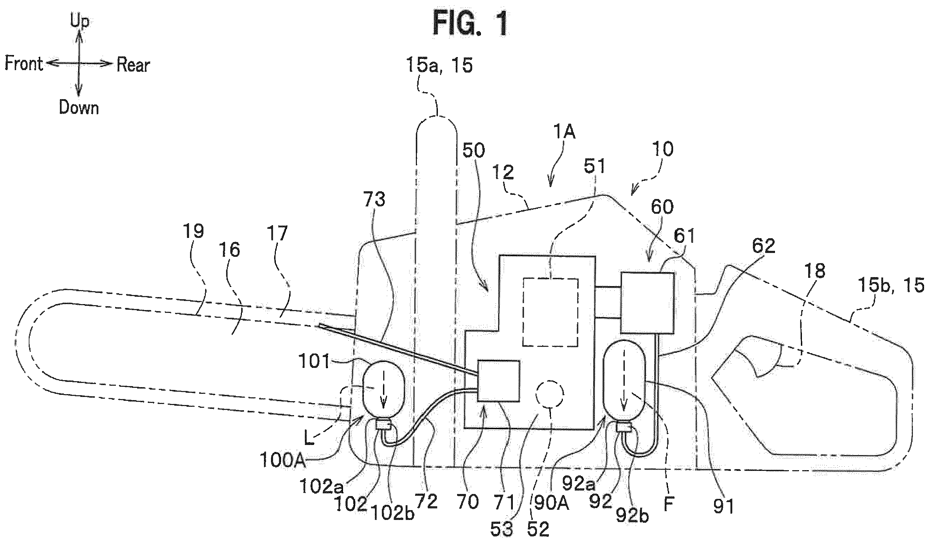

As shown in FIG. 1, the chainsaw 1A of the first embodiment is compact power work equipment for cutting an object to be cut, such as a tree or a board. The chainsaw 1A includes a main body 10, a handle 15 that supports the main body 10, a guide bar 16 attached to the main body 10, and a fuel container 90A and a lubricating oil container 100A that are detachably attached to the main body 10.

The main body 10 includes a main body case 12 made of resin and an internal combustion engine 50, wherein the internal combustion engine 50 is housed in the main body case 12.

The internal combustion engine 50 is a drive source of a saw chain 17 to be described later. The internal combustion engine 50 of the first embodiment is a two-stroke engine driven with liquid fuel F having gasoline mixed with lubricating oil. The internal combustion engine 50 includes a cylinder 51 that has a piston (not shown) housed therein, a crankshaft 52 that is rotated by reciprocating movement of the piston, a crankcase portion 53 that houses the crankshaft 52, a fuel suction unit 60, and a lubricating-oil suction unit 70.

The internal combustion engine 50 is fixed in the main body case 12 so as to have the cylinder 51 disposed at a higher position and have the crankcase portion 53 disposed at a lower position, when the chainsaw 1A is not operated. Additionally, the internal combustion engine 50 has a piston (not shown) in the cylinder 51 moved in the up-down direction, and has the crankshaft 52 extended in the right-left direction.

The fuel suction unit 60 is a suction device for suctioning the liquid fuel F from the fuel container 90A, and includes a first positive-displacement pump 61 driven by the internal combustion engine 50. The first positive-displacement pump 61 of the first embodiment is a diaphragm carburetor to generate a suctioning action. This carburetor includes a storage chamber (not shown) for storing the liquid fuel F, and a rubber film (diaphragm) in the storage chamber is expanded and contracted by a negative pressure generated by the reciprocating motion of a piston (not shown), to suction the liquid fuel F. The fuel suction unit 60 is juxtaposed to the internal combustion engine 50 at the rear of the upper portion thereof. Additionally, the fuel suction unit 60 has one end of a suction hose 62 connected thereto.

The fuel suction unit 60 suctions the liquid fuel F from the fuel container 90A through the suction hose 62 to generate an air-fuel mixture of the liquid fuel F and air. The air-fuel mixture generated by the fuel suction unit 60 is fed to a combustion chamber in the cylinder 51.

The guide bar 16 is a plate-like member extending in the front-rear direction, and the rear end of the guide bar 16 is attached to the front end of the main body 10. The guide bar 16 has an annular saw chain 17 wound around the outer periphery thereof. The saw chain 17 has the drive force of the crankshaft 52 transmitted thereto via a gear (not shown). Thus, the saw chain 17 is rotated along the outer periphery of the guide bar 16 by a driving force of the crankshaft 52. This defines the outer periphery of the guide bar 16 as a sliding portion 19 on which the saw chain 17 is rotated.

The lubricating-oil suction unit 70 is a suction device for suctioning lubricating oil L from the lubricating oil container 100A, and includes a second positive-displacement pump 71 driven by the internal combustion engine 50. The second positive-displacement pump 71 is driven by the crankshaft 52 being rotated through reciprocating motion of a piston, to suction the lubricating oil L from the lubricating oil container 100A.

The lubricating-oil suction unit 70 is disposed in front of, and near, the crankshaft 52 of the internal combustion engine 50. Additionally, the lubricating-oil suction unit 70 has one end of a suction hose 72 connected thereto.

The lubricating-oil suction unit 70 suctions the lubricating oil L from the lubricating oil container 100A through the suction hose 72. In addition, the lubricating-oil suction unit 70 feeds the lubricating oil L through a supply hose 73 to the sliding portion 19 of the guide bar 16 on which the saw chain 17 is rotated.

The handle 15 includes a front handle 15a and a rear handle 15b. The front handle 15a is a grip portion disposed on the outer periphery of the main body 10, and is formed by bending a cylindrical member. The rear handle 15b is connected to the rear of the main body 10, and the front of the rear handle 15b is disposed at the lower rear of the main body 10. The rear handle 15b is provided with a throttle trigger 18 as an operation means for the user to increase or decrease the rotation speed of the saw chain 17 in a state of holding the real handle 15b.

When cutting an object to be cut, such as a tree and a board, with the chainsaw 1A, the operator holds the front handle 15a with one hand and holds the rear handle 15b with the other hand, to carry the chainsaw 1A. Then, a throttle trigger 18 of the rear handle 15b is operated to rotate the saw chain 17 for the saw chain 17 to cut the object. The chainsaw 1A in FIG. 1 is in a state of the operator vertically cutting the object, and is positioned so that the saw chain 17is rotated about a horizontal axis (i.e., rotated vertically). Note that when the operator horizontally cuts the object, the chainsaw 1A is positioned to have the saw chain 17 rotated laterally.

The fuel container 90A is a closed container composed of a flexible bag 91. The bag 91 is provided at one end in the longitudinal direction thereof with a connection part 92. In the first embodiment, the connection part 92 is disposed lower than the upper end of the bag 91 when the chainsaw 1A is not operated. The bag 91 of the first embodiment stores therein the liquid fuel F having gasoline mixed with lubricating oil at a predetermined ratio. The fuel container 90A is housed in the main body case 12 of the main body 10. The main body case 12 is formed to have a housing space for the fuel container 90A, under the fuel suction unit 60. The main body case 12 is formed with an opening for access to the housing space so that the fuel container 90A is put into and taken out of the housing space. In this manner, the fuel container 90A is detachably attached to the main body 10.

When the chainsaw 1A is not operated and the fuel container 90A is housed in the main body case 12, the fuel container 90A is disposed behind the crankcase portion 53 and under the fuel suction unit 60. As described above, when the chainsaw 1A is not operated, the fuel container 90A is disposed in a space provided under the fuel suction unit 60 and behind the crankcase portion 53.

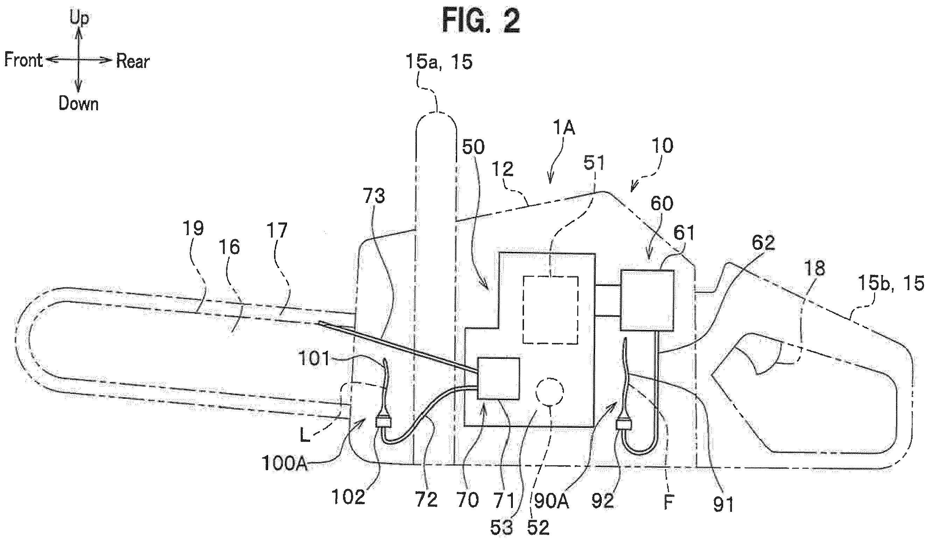

When the liquid fuel F is filled into the bag 91, the bag 91 is wholly swelled with the increase of the liquid fuel F in the bag 91. In contrast, when the liquid fuel F is discharged from the bag 91, the bag body 91 internally contracts as the liquid fuel F in the bag 91 decreases, and the bag 91 is wholly collapsed, as shown in FIG. 2. In this manner, the bag 91 is flexible so as to be swelled or collapsed depending on the amount of contents in storage.

A material superior in oil resistance, such as resin or aluminum, may preferably be used as a material of the bag 91. In addition, the thickness of the material may preferably be set to one between 0.1 mm to 0.5 mm, for example, to secure the strength while securing the flexibility of the bag 91. Further, the bag 91 may preferably be made to have a multiple structure for securing the strength, while the thickness of the material of the bag 91 is made thinner for ensuring flexibility. Moreover, the bag 91 may preferably be made partly or wholly transparent so that the amount of the remaining liquid fuel F in the bag 91 can be seen from outside.

The bag 91 is formed at one end in the longitudinal direction thereof with a throughhole, to which the connection part 92 is attached, as shown in FIG. 1. The connection part 92 includes a cylindrical body 92a and a cap 92b. The base of the cylindrical body 92a is inserted into the throughhole of the bag 91, and the cap 92b is put on the front end of the cylindrical body 92a. When the bag 91 is filled with the liquid fuel F in the production process of the fuel container 90A, the liquid fuel F is injected into the bag 91 through the cylindrical body 92a, and then the bag 91 is closed by a sealing member (not shown). Thereafter, when the fuel container 90A is attached to the chainsaw 1A, the cap 92b is put on the cylindrical body 92a to close the front end of the cylindrical body 92a. At this time, it is preferable not to mix air into the bag 91.

The connection part 92 is connected to the fuel suction unit 60 through the suction hose 62 in a liquid-tight manner. The structure to connect the connection part 92 with the suction hose 62 is not limited. For example, one end of the suction hose 62 may be inserted through the cap 92b into the bag 91. Alternatively, one end of the suction hose 62 may be provided with a cylindrical needle so that the needle is inserted into the cap 92b for inserting one end of the suction hose 62 into the bag 91.

The lubricating oil container 100A has substantially the same configuration as the fuel container 90A described above, except that a bag 101 stores the lubricating oil L. Therefore, a detailed description about the configuration of the lubricating oil container 100A will be omitted for the same configuration as the fuel container 90A.

The lubricating oil container 100A is housed in the main body case 12 of the main body 10, particularly in a housing space in front of the lubricating-oil suction unit 70. The lubricating oil container 100A is detachably attached to the main body 10. In the first embodiment, a connection part 102 is positioned lower than the upper end of the bag 101 when the chainsaw 1A is not operated. The connection part 102 includes a cylindrical body 102a and a cap 102b.

The bag 101 of the lubricating oil container 100A is flexible so as to be swelled or collapsed according to the amount of the lubricating oil L in storage. Additionally, the connection part 102 of the lubricating oil container 100A is connected to the lubricating-oil suction unit 70 through the suction hose 72 in a liquid-tight manner.

The above-described chainsaw 1A includes the main body 10 having the internal combustion engine 50, and the fuel container 90A detachably attached to the main body 10, as shown in FIG. 1. The fuel container 90A includes the flexible bag 91 to store the liquid fuel F to be supplied to the internal combustion engine 50. The bag 91 is provided with the connection part 92 to be connected to the fuel suction unit 60 of the internal combustion engine 50. The bag 91 has the connection part 92 connected with the fuel suction unit 60 in a liquid-tight manner, and is configured to collapse as the liquid fuel F in the bag 91 decreases.

In this configuration, the fuel container 90A is attached to the main body 10 of the chainsaw 1A to supply the liquid fuel F to the internal combustion engine 50, and is replaced with another fuel container 90A when the liquid fuel F in the fuel container 90A runs out, allowing a user to have no messy hands for resupplying fuel to the internal combustion engine 50.

When the liquid fuel F in the bag 91 is suctioned by the fuel suction unit 60, the bag 91 internally contracts as the liquid fuel in the bag 91 decreases, as shown in FIG. 2, making the bag 91 collapsed to prevent the bag 91 from having negative pressure therein. Therefore, there is no need to set any part for the communication between inside and outside of the bag 91 when the fuel container 90A is attached to the main body 10, allowing for easy replacement of the fuel container 90A.

In addition, the bag 91 is preferably configured to be internally expanded and deformed when the fuel swells during storage, to prevent the bag 91 from having excessive positive pressure therein so that there is no need to set any part for the communication between inside and outside of the bag 91, allowing for easy replacement of the fuel container 90A.

The fuel container 90A in FIG. 1 can be produced and sold separately, so that the fuel container 90A is filled with the liquid fuel F having the properties compatible with the internal combustion engine 50 so as to be supplied to the user. This allows the internal combustion engine 50 to be driven with the liquid fuel F having the optimum properties.

The internal combustion engine 50 in FIG. 1 is driven with the liquid fuel F mixed with lubricating oil. Then, the bag 91 of the fuel container 90A is filled with the liquid fuel F mixed with the lubricating oil. In this configuration, the liquid fuel F having a mixing ratio compatible with the internal combustion engine 50 is filled in the bag 91 of the fuel container 90A so as to be supplied to the user, and therefore the internal combustion engine 50 is driven with the liquid fuel F having the optimum mixing ratio. In other words, the user is unable to change the mixing ratio of the liquid fuel F, and this secures safety and functionality of the chainsaw 1A, and prevents the service life from being shortened.

In addition, the bag 91 is deformed while maintaining the sealed state thereof, to let the liquid fuel F less likely evaporated. Additionally, as the bag 91 is kept in a sealed state, foreign matter such as dust is prevented from mixing into the liquid fuel F. This allows for extending the service life of a filter installed in the fuel system of the internal combustion engine 50, and further allows for configuring the fuel system of the internal combustion engine 50 so as to have no filters.

The fuel suction unit 60 according to the first embodiment uses the first positive-displacement pump 61, so that the liquid fuel F in the bag 91 is reliably suctioned.

Further, the first positive-displacement pump 61 is driven by the internal combustion engine 50, requiring no special drive sources for the first positive-displacement pump 61, and is therefore provided at a relatively low cost. Additionally, as the first positive-displacement pump 61 is driven by the internal combustion engine 50, if the liquid fuel F in the bag 91 runs out and the internal combustion engine 50 stops driving, the fuel suction unit 60 also stops operation. Then, the first positive-displacement pump 61 is prevented from executing no-discharge operation, to prevent failures of the first positive-displacement pump 61 and the bag 91.

Still further, the first positive-displacement pump 61 is operated by the suctioning action generated from the internal combustion engine 50 being driven, to allow the first positive-displacement pump 61 to be efficiently operated.

Still further, the first positive-displacement pump 61 is a diaphragm carburetor to have the suctioning action generated from the internal combustion engine 50 being driven. The structure of an existing carburetor is then convenient for suctioning the liquid fuel F in the bag 91. Additionally, an existing carburetor may preferably be used to reduce manufacturing costs of the fuel suction unit 60.

Furthermore, the chainsaw 1A of the present embodiment includes the lubricating oil container 100A detachably attached to the main body 10. The lubricating oil container 100A includes the flexible bag 101, wherein the bag 101 can store the lubricating oil L to lubricate the sliding portion 19. The bag 101 is provided with the connection part 102 to be connected to the lubricating-oil suction unit 70 of the internal combustion engine 50. The bag 101 has the connection part 102 connected with the lubricating-oil suction unit 70 in a liquid-tight manner, and is configured to collapse as the lubricating oil L in the bag 101 decreases.

In this configuration, the lubricating oil container 100A is attached to the chainsaw 1A to supply the lubricating oil L to the sliding portion 19, and is replaced with another lubricating oil container 100A when the lubricating oil L in the lubricating oil container 100A runs out, to allow the user to have no messy hands for resupplying the lubricating oil L to the sliding portion 19.

When the lubricating oil L in the bag 101 is suctioned by the lubricating-oil suction unit 70, the bag 101 internally contracts as the lubricating oil in the bag 101 decreases, as shown in FIG. 2, making the bag 101 collapsed to prevent the bag 101 from having negative pressure therein. Therefore, there is no need to set any part for the communication between inside and outside of the bag 101 when the lubricating oil container 100A is attached to the main body 10, allowing for easy replacement of the lubricating oil container 100A.

In addition, the bag 101 is preferably configured to be internally expanded and deformed when the lubricating oil swells during storage, to prevent the bag 101 from having excessive positive pressure therein so that there is no need to set any part for the communication between inside and outside of the bag 101, allowing for easy replacement of the lubricating oil container 100A.

The lubricating oil container 100A in FIG. 1 can be produced and sold separately, so that the lubricating oil container 100A is filled with the lubricating oil L suitable for the sliding portion 19 of the chainsaw 1A and the work so as to be supplied to the user. This allows the chainsaw 1A to be driven with the optimum lubricating oil.

In addition, the bag 101 is deformed while maintaining the sealed state thereof, to let the lubricating oil L less likely evaporated. Additionally, as the bag 101 is kept in a sealed state, foreign matter such as dust is prevented from mixing into the lubricating oil L. This allows for extending the service life of a filter installed in the lubricating oil system of the chainsaw 1A, and further allows for configuring the lubricating oil system of the chainsaw 1A so as to have no filters.

The lubricating-oil suction unit 70 according to the first embodiment uses the second-displacement pump 71, so that the lubricating oil L in the bag 101 is reliably suctioned.

Further, the second positive-displacement pump 71 is driven by the internal combustion engine 50, requiring no special drive sources for the second positive-displacement pump 71, and is therefore provided at a relatively low cost.

In the chainsaw 1A of the first embodiment, the bag 91 of the fuel container 90A is provided at one end thereof with the connection part 92 which is positioned lower than the upper end of the bag 91 when the chainsaw 1A is not operated. Similarly, the bag 101 of the lubricating oil container 100A is provided at one end thereof with the connection part 102 which is positioned lower than the upper end of the bag 101 when the chainsaw 1A is not operated. The fuel container 90A and the lubricating oil container 100A are attached to the main body 10 so that the liquid fuel F and the lubricating oil L in the respective bags 91, 101 flow downward when the chainsaw 1A is not operated.

The chainsaw 1A in FIG. 1 is in a state of being started (or not being operated). In this state, the flow direction of the liquid fuel F in the bag 91 is orthogonal to the axial direction of the crankshaft 52 and in the direction of the piston (not shown) being moved, resulting in the same direction as that of gravitational force. In this case, even if air is mixed in the bag 91, the air is accumulated in the upper part of the bag 91, while the liquid fuel F is supplied to the fuel suction unit 60 from the lower part of the bag 91, away from the air, to allow the internal combustion engine 50 to be started more favorably.

The chainsaw 1A in FIG. 1 is also in the state of vertically cutting an object to be cut, such as wood. In this state, the flow direction of the liquid fuel F in the bag 91 or the lubricating oil L in the bag 101 is orthogonal to the axial direction of the crankshaft 52 and in the direction of the piston (not shown) being moved, resulting in the same direction as that of gravitational force. In this case, even if air is mixed in the bags 91, 101, the air is accumulated in the upper part of the bags 91, 101. The liquid fuel F is suctioned into the fuel suction unit 60 from the lower part of the bag 91, away from the air in the bag 91, to allow the internal combustion engine 50 to favorably continue its operation. Similarly, the lubricating oil L is suctioned into the lubricating-oil suction unit 70 from the lower part of the bag 101, away from the air in the bag 101, to allow the sliding portion 19 of the chainsaw 1A to favorably continue its operation.

Additionally, setting the longitudinal orientation of the bags 91, 101 vertical or inclined allows for effectively utilizing the space in the main body 10 to dispose the fuel container 90A and the lubricating oil container 100A.

Hereinabove, the first embodiment of the present invention has been described, but the present invention is not limited thereto and the first embodiment may be suitably modified without departing from the scope of the present invention. In the chainsaw 1A of the first embodiment, the fuel container 90A and the lubricating oil container 100A are housed in the main body case 12, as shown in FIG. 1, but there is no limitation in the arrangement and orientation of the fuel container 90A and the lubricating oil container 100A in the main body 10. For example, the fuel container 90A or the lubricating oil container 100A may be attached to the outer surface of the main body case 12. Likewise, the bag 101 of the lubricating oil container 100A of the first embodiment may be disposed in the same area as the bag 91 of the fuel container 90A.

The fuel suction unit 60 of the first embodiment uses the first positive-displacement pump 61 of a diaphragm carburetor, but the configuration of the fuel suction unit 60 is not limited thereto, and various suction mechanisms can be used.

The fuel container 90A of the first embodiment is provided at one end in the longitudinal direction of the bag 91 with the connection part 92, but the shape and size of the bag 91 of the fuel container 90A, the position and shape of the connection part 92, or the like are not limited thereto and can be suitably set depending on the storage space of the fuel container 90A.

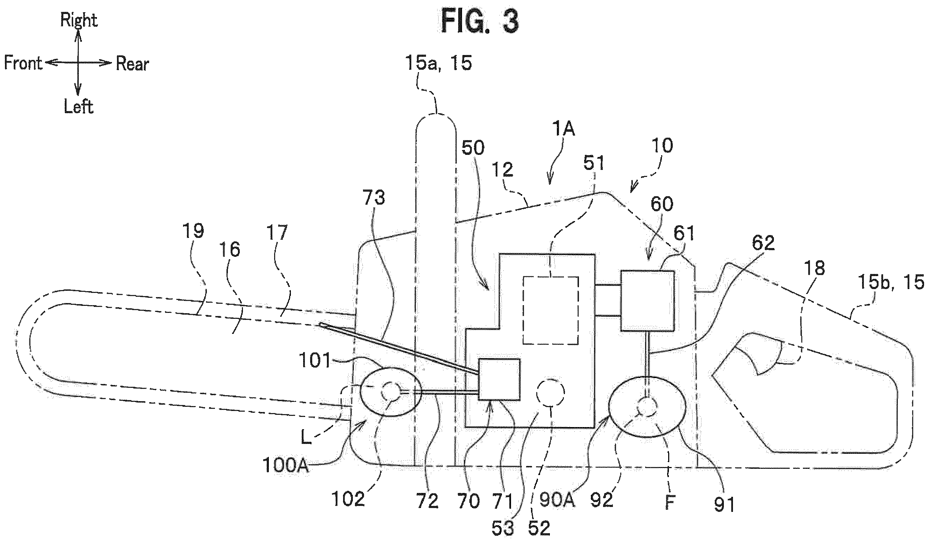

In the chainsaw 1A of the first embodiment, the connection part 92 is positioned lower than the upper end of the bag 91 of the fuel container 90A and the connection part 102 is positioned lower than the upper end of the bag 101 of the lubricating oil container 100A, when the chainsaw 1A is not operated, but the orientations of the fuel container 90A and the lubricating oil container 100A are not limited to those in the drawing. For example, as shown in FIG. 3, the connection parts 92, 102 may be positioned lower than the upper ends of the bags 91, 101, only when the chainsaw 1A horizontally cuts an object to be cut, such as a tree.

In this configuration, even if air is mixed in the bag 91, the air is accumulated in the upper part of the bag 91, and the fuel suction portion 60 suctions the liquid fuel F from the lower part of the bag 91, away from the air in the bag 91, to allow the internal combustion engine 50 to favorably continue its operation. Similarly, even if air is mixed in the bag 101, the lubricating oil suction part 70 suctions the lubricating oil L from the lower part of the bag 101, away from the air in the bag 101, to allow the sliding portion 19 of the chainsaw 1A to favorably continue its operation.

Note that the fuel container 90A and the lubricating oil container 100A may be arranged so that the liquid fuel F and the lubricating oil L respectively flow in directions somewhere between those in FIG. 1 and those in FIG. 3. That is, the longitudinal orientation of the fuel container 90A and the lubricating oil container 100A may be inclined to the vertical direction and to the horizontal direction, when the chainsaw 1A is not operated. In this case, the internal combustion engine 50 or the sliding portion 19 of the chainsaw 1A can keep favorable condition while in cutting operation either in the vertical direction or in the horizontal direction.

The internal combustion engine 50 of the first embodiment is driven with the liquid fuel F having gasoline mixed with lubricating oil, but the structure of the internal combustion engine is not limited thereto. For example, the internal combustion engine may be driven with liquid fuel having alcohol fuel mixed with lubricating oil. The bag 91 of the fuel container 90A can store liquid fuel suitable for the configuration of the internal combustion engine. Alternatively, the bag 91 of the fuel container 90A may be used to contain gasoline for a four-stroke internal combustion engine, for example, in which gasoline is separated from lubricating oil. In this configuration, the lubricating oil container 100A may be disposed in the same area as the bag 91 of the fuel container 90A.

The internal combustion engine 50 of the first embodiment has the cylinder 51 disposed at a higher position and has the crankcase portion 53 disposed at a lower position, and has the crankshaft 52 extended in the right-left direction, when the chainsaw 1A is not operated, but the structure of the engine 50 is not limited thereto. For example, the cylinder 51 and the crankcase portion 53 may be juxtaposed to each other in the right-left direction. Also, the crankshaft 52 may be arranged to extend in the front-rear direction or in the up-down direction.

In the first embodiment, a description has been given of the chainsaw 1A to which the present invention is applied, but the power work equipment to which the present invention is applicable is not limited thereto, and the present invention is applicable to various power work equipment such as a hedge trimmer, a brush cutter, and a blower.

### Second Embodiment

Next, a second embodiment of the present invention will be described. In the second embodiment, a description will be given of a hedge trimmer 1B that has a fuel container of the present invention applied thereto, and embodies power work equipment of the present invention.

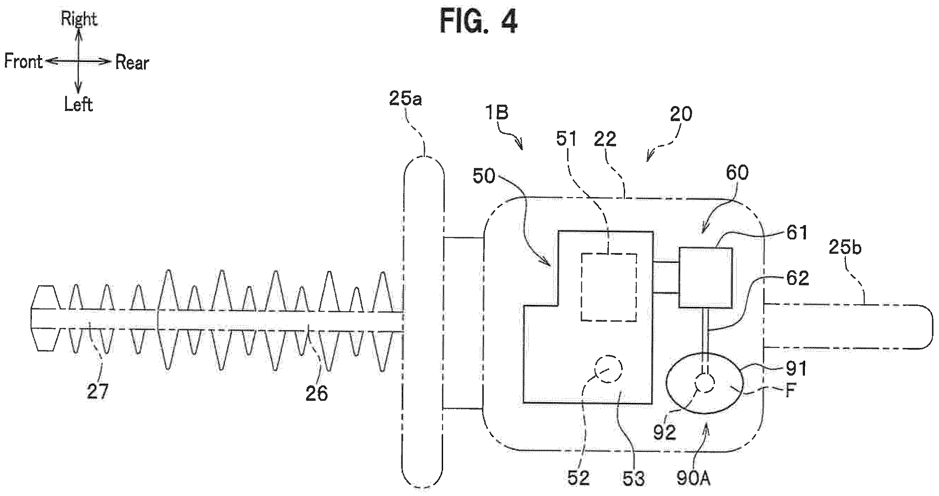

As shown in FIG. 4, the hedge trimmer 1B of the second embodiment is a compact power work equipment for cutting an object to be cut, such as plants and hedges. The hedge trimmer 1B includes a main body 20, a front handle 25a and a rear handle 25b that support the main body 20, two (upper and lower) blades 26, 27 attached to the main body 20, and the fuel container 90A detachably attached to the main body 20.

When cutting an object to be cut, such as plants and hedges, with the hedge trimmer 1B, the operator holds the front handle 25a with one hand and holds the rear handle 25b with the other hand, to carry the hedge trimmer 1B. Then, a throttle trigger (not shown) of the rear handle 25b is operated to reciprocate one or both of the two blades 26, 27 in the front-rear direction, to cut the object.

The internal combustion engine 50 and the fuel container 90A are housed in a main body case 22 of the main body 20 of the second embodiment. The fuel container 90A is detachably attached to the main body 20.

In the internal combustion engine 50 of the second embodiment, the cylinder 51 is disposed on the right side and the crankcase portion 53 is disposed on the left side, when the hedge trimmer 1B is not operated. Additionally, in the internal combustion engine 50 of the second embodiment, the crankshaft 52 extends in the vertical direction.

In the hedge trimmer 1B of the second embodiment, the fuel container 90A is disposed to the left of the fuel suction unit 60, when the trimmer is not operated. Additionally, in the second embodiment, the fuel container 90A is oriented so that the connection part 92 is disposed at the lower end of the bag 91.

In this manner, the hedge trimmer 1B of the second embodiment has the connection part 92 provided at one end of the bag 91 so that the connection part 92 is positioned lower than the upper end of the bag 91 when the hedge trimmer 1B is not operated. Additionally, the fuel container 90A is attached to the main body 20 so that the liquid fuel F in the bag 91 flows downward, when the hedge trimmer 1B is not operated.

In this configuration, even if air is mixed in the bag 91, the air is accumulated in the upper part of the bag 91 because the hedge trimmer 1B is started in the state as shown in FIG. 4, and then the liquid fuel F is suctioned by the fuel suction unit 60 from the lower part of the bag 91, away from the air in the bag 91, to allow the internal combustion engine 50 to be started more favorably. In addition, as a work using the hedge trimmer 1B is often executed in the state shown in FIG. 4, even if air is mixed in bag 91 during work, the air is accumulated in the upper part of bag 91, while the liquid fuel F is suctioned by the fuel suction unit 60 from the lower part of the bag 91, away from the air in the bag 91, to allow the internal combustion engine 50 to favorably continue its operation. In contrast, as the hedge trimmer 1B is often used with its front side raised and its rear side lowered during work, the flow direction of the liquid fuel F is preferably inclined so as to have more flow from the front side to the rear side, as compared with the setup of the bag 91 in FIG. 4, to allow the internal combustion engine 50 to favorably continue its operation, even when the hedge trimmer 1B is used with its front side raised and its rear side lowered. Additionally, setting the longitudinal orientation of the bag 91 vertical or inclined allows for effectively utilizing the space in the main body 10 to dispose the fuel container 90A.

Hereinabove, the second embodiment of the present invention has been described, but the present invention is not limited thereto and the second embodiment may be suitably modified without departing from the scope of the present invention, as with other embodiments.

### Third Embodiment

Next, a third embodiment of the present invention will be described. In the third embodiment, a description will be given of a brush cutter 1C that has a fuel container of the present invention applied thereto, and embodies power work equipment of the present invention.

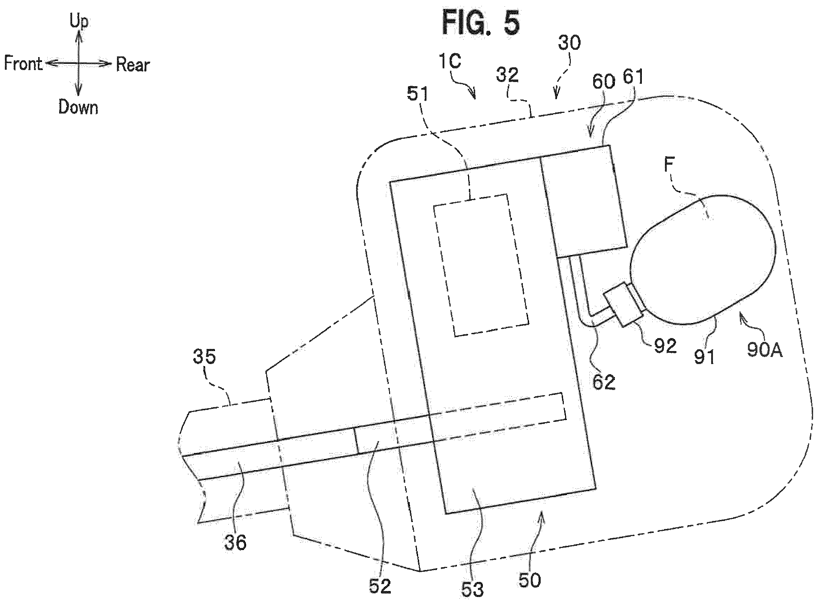

As shown in FIG. 5, the brush cutter 1C of the third embodiment is a compact power work equipment for cutting an object to be cut, such as grass and shrubs. The internal combustion engine 50 and the fuel container 90A are housed in a main body case 32 of a main body 30 of the brush cutter 1C. In addition, the base end of an operating rod 35 is connected to the main body 30, and a rotary blade (not shown) is attached to the front end of the operating rod 35.

A drive transmission shaft 36 is inserted through the operating rod 35, the front end of the drive transmission shaft 36 is connected to a rotary shaft of a rotary blade (not shown), and the base end of the drive transmission shaft 36 is connected to the crankshaft 52. The rotational driving force of the crankshaft 52 is transmitted to the rotary blade via the drive transmission shaft 36 to rotate the rotary blade.

When cutting an object to be cut, such as grass and shrubs, with the brush cutter 1C, the operator uses a shoulder strap (not shown) of the operating rod 35 and a U-shaped handle (not shown) to carry the brush cutter 1C, and operates a throttle lever (not shown) to cut the object with the rotary blade.

The internal combustion engine 50 of the third embodiment has the cylinder 51 disposed at a higher position and has the crankcase portion 53 disposed at a lower position. Additionally, the internal combustion engine 50 of the third embodiment has the crankshaft 52 extended in the front-rear direction. In the brush cutter 1C of the third embodiment, the drive transmission shaft 36 is linearly connected with the crankshaft 52. When the brush cutter 1C is operated, the drive transmission shaft 36 and the crankshaft 52 are inclined to the horizontal so that the front end is positioned lower than the rear end.

In addition, in the third embodiment, the fuel container 90A is oriented so that the connection part 92 is disposed at the front end of the bag 91 and the front end of the bag 91 is positioned lower than the rear end. This makes the bag 91 longitudinally inclined, when the brush cutter 1C is operated, so as to be oriented in the same direction as the axes of the drive transmission shaft 36 and the crankshaft 52.

As described above, in the brush cutter 1C of the third embodiment, the fuel container 90A is attached to the main body 30 so that the liquid fuel F in the bag 91 flows in the axial direction of the crankshaft 52 of the internal combustion engine 50, when the cutter is operated. In this configuration, even if air is mixed in the bag 91, the air is accumulated in the upper part of the bag 91 in many cases when the brush cutter 1C is operated, while the liquid fuel F is suctioned by the fuel suction unit 60 from the lower part of the body 91, away from the air in the bag 91.

Hereinabove, the third embodiment of the present invention has been described, but the present invention is not limited thereto and the third embodiment may be suitably modified without departing from the scope of the present invention, as with other embodiments. For example, the front end of the drive transmission shaft 36 may be connected to the rotary shaft of a blower fan for transmitting the rotational driving force of the crankshaft 52 to the blower fan, to form a blower that rotates the blower fan to blow away grass or dust.

Further, in the brush cutter 1C of the third embodiment, the crankshaft 52 extends in the front-rear direction, but the crankshaft 52 may extend in the right-left direction to transmit the rotational driving force of the crankshaft 52 to the drive transmission shaft 36 via a drive transmission mechanism with a plurality of gears.

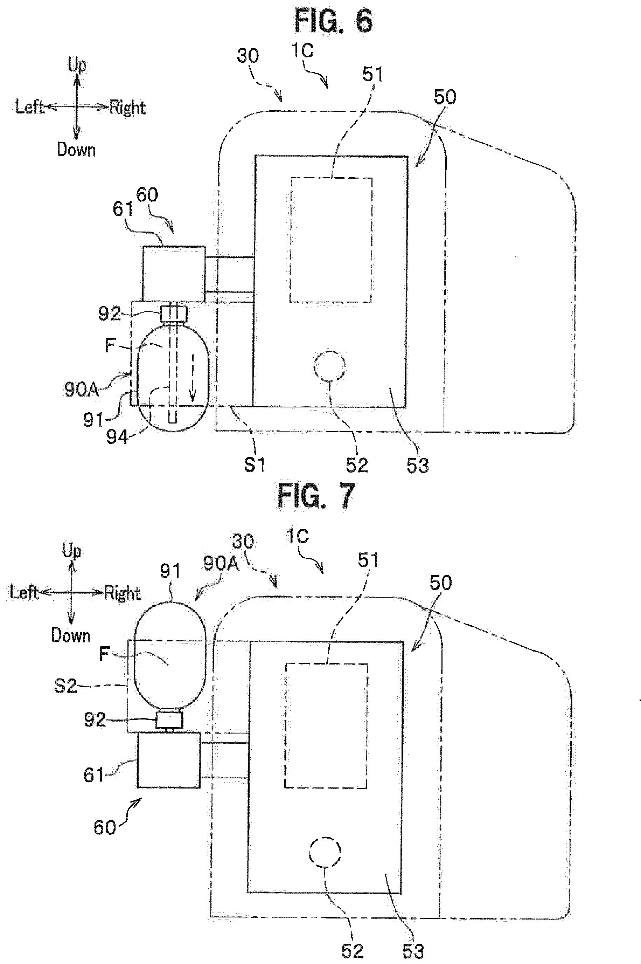

Furthermore, when the fuel container 90A is disposed outside the main body 30, the fuel container 90A is preferably arranged under the fuel suction unit 60 and in a space S1 next to the crankcase portion 53 of the internal combustion engine 50, as shown in FIG. 6. Alternatively, the fuel container 90A may be arranged above the fuel suction unit 60 and in a space S2 next to the cylinder 51 of the internal combustion engine 50, as shown in FIG. 7. In these configurations, the main body 30 and the fuel container 90A are compactly set to allow the brush cutter 1C to be reduced in size.

Note that the chainsaw 1A in FIG. 1, the hedge trimmer 1B in FIG. 4, or the blower (not shown) may also be configured to have the fuel container 90A arranged as in the third embodiment, for the main body 10 or 20 and the fuel container 90A to be compactly arranged to allow the power work equipment to be reduced in size.

Moreover, in the configuration shown in FIG. 6, the bag 91 preferably has an inner pipe 94 inserted thereto, where the inner pipe 94 is connected to the fuel suction unit 60 in a liquid-tight manner. This configuration changes the flow direction of the liquid fuel F in the bag 91, as compared with the case where the inner pipe 94 is not provided in the bag 91. Specifically, when the inner pipe 94 is not provided in the bag 91, the liquid fuel F in the bag 91 flows upward (toward the upper part of the bag 91) and air is accumulated on the downstream side in the flow direction (in the upper part of the bag 91). In contrast, when the inner pipe 94 is inserted into the bag 91, the liquid fuel F in the bag 91 flows downward (toward the lower part of the bag 91) and air is accumulated on the upstream side in the flow direction (in the upper part of the bag 91), so that the liquid fuel F is suctioned by the fuel suction unit 60 from a position, away from the air in the bag 91.

### Fourth Embodiment

Next, a fourth embodiment of the present invention will be described. A brush cutter 1D of the fourth embodiment has substantially the same configuration as the brush cutter 1C (see FIG. 5) of the third embodiment described above, except for the orientation of the fuel container 90A.

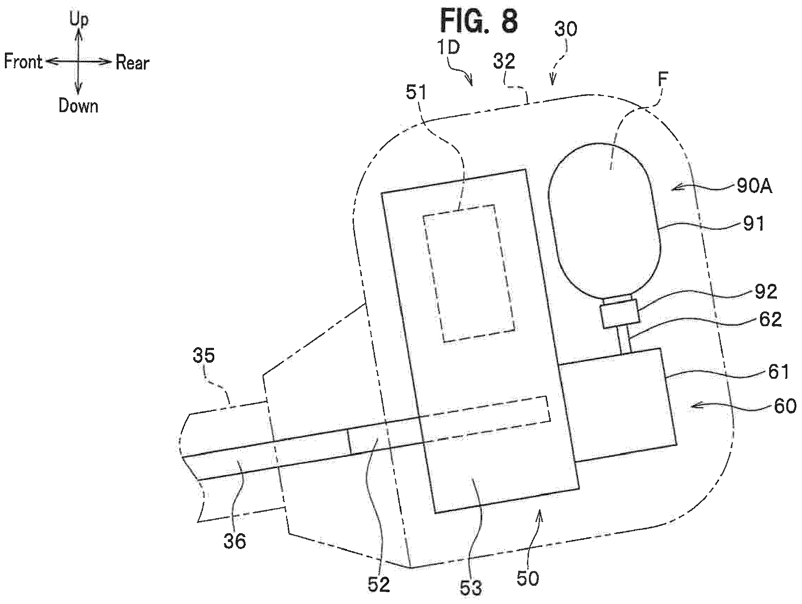

The brush cutter 1D of the fourth embodiment has the cylinder 51 disposed at a higher position and has the crankcase portion 53 and the fuel suction unit 60 disposed at lower positions, as shown in FIG. 8. The fuel container 90A is attached to the main body 30 so that the connection part 92 is disposed at the lower end of the bag 91, when the brush cutter 1D is operated. The bag 91 is disposed so as to be longitudinally perpendicular to the axis of the crankshaft 52. This causes the liquid fuel F in the bag 91 to flow downward along the axis direction of the cylinder 51 (i.e., vertical direction).

As described above, in the brush cutter 1D of the fourth embodiment, the fuel container 90A is attached to the main body 30 so that the liquid fuel F in the bag 91 flows in the direction orthogonal to the axis of the crankshaft 52 of the internal combustion engine 50 and in the axis direction of the cylinder 51, when the cutter is operated. The cylinder 51 of the internal combustion engine 50 is disposed on an upstream side of the flow direction of the liquid fuel F, and the crankcase portion 53 of the internal combustion engine 50 is disposed on a downstream side of the flow direction of the liquid fuel F. Additionally, in the brush cutter 1D of the fourth embodiment, the cylinder 51 of the internal combustion engine 50 is disposed on the upstream side in the flow direction of the liquid fuel F, and the fuel suction unit 60 is disposed on the downstream side in the flow direction of the liquid fuel F, when the cutter is operated.

In this configuration, even if air is mixed in the bag 91 when the brush cutter 1D is operated, the air is accumulated in the upper part of the bag 91, while the liquid fuel F is suctioned by the fuel suction unit 60 from the lower part of the bag 91, away from the air in the bag 91.

Hereinabove, the fourth embodiment of the present invention has been described, but the present invention is not limited thereto and the fourth embodiment may be suitably modified without departing from the scope of the present invention, as with other embodiments.

### Fifth Embodiment

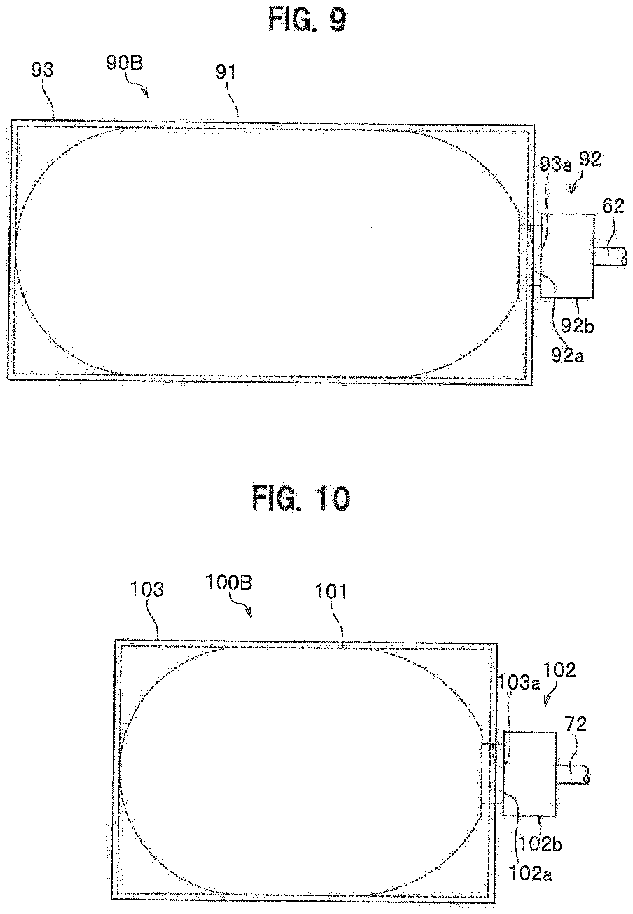

Next, a fuel container 90B according to a fifth embodiment of the present invention will be described. The fuel container 90B of the fifth embodiment includes the bag 91 and a case 93 housing the bag 91, as shown in FIG. 9. The case 93 is a box made of metal or resin for protecting the bag 91, and is formed harder than the bag 91 to have a higher strength. The case 93 is detachably attached to the main body of power work equipment.

The case 93 is provided with a connection hole 93a penetrating through one of its walls. The connection part 92 of the bag 91 is inserted through the connection hole 93a, with the front end of the connection part 92 protruded outward from the case 93. Note that the case 93 is formed with a vent hole (not shown) for communication between inside and outside thereof.

The fuel container 90B of the fifth embodiment includes the case 93 housing the bag 91, wherein the case 93 is detachably attached to the main body 10. In this configuration, the flexible bag 91 is protected by the case 93 to prevent the bag 91 from being damaged during transportation or storage.

Hereinabove, the fifth embodiment of the present invention has been described, but the present invention is not limited thereto and the fifth embodiment may be suitably modified without departing from the scope of the present invention, as with other embodiments. Similar to the fuel container 90B of the fifth embodiment, as shown in FIG. 10, a bag 101 of a lubricating oil container 100B may be housed in a case 103 made of metal or resin, with the front end of a connection part 102 protruded outward through a connecting hole 103a of the case 103. This makes the flexible bag 101 protected by the case 103.

### LEGEND FOR REFERENCE NUMERALS

- 1A: Chainsaw (power work equipment of the first embodiment)
- 1B: Hedge trimmer (power work equipment of the second embodiment)
- 1C: Brush cutter (power work equipment of the third embodiment)
- 1D: Brush Cutter (Power work equipment of fourth Embodiment)
- 10: Main body (first embodiment)
- 12: Main body case
- 16: Guide bar
- 17: Saw chain
- 19: Sliding portion
- 20: Main body (second embodiment)
- 22: Main body case
- 26: Blade
- 30: Main body (third embodiment)
- 32: Main body case
- 35: Operating rod
- 36: Drive transmission shaft
- 50: Internal combustion engine
- 51: Cylinder
- 52: Crankshaft
- 53: Crankcase portion
- 60: Fuel suction unit
- 61: First positive-displacement pump
- 62: Suction hose
- 70: Lubricating-oil suction unit
- 71: Second positive-displacement pump
- 72: Suction hose
- 73: Supply hose
- 90A: Fuel container (first to fourth embodiments)
- 90B: Fuel Container (fifth Embodiment)
- 91: Bag
- 92: Connection part
- 93: Case
- 94: Inner pipe
- 100A: Lubricating oil container (first embodiment)
- 100B: Lubricating oil container (fifth embodiment)
- 101: Bag
- 102: Connection part
- 103: Case
- F: Liquid fuel
- L: Lubricating oil.

## Claims

1. A fuel container used for storing liquid fuel to be supplied to an internal combustion engine, comprising:
a bag that is flexible and configured to store the liquid fuel,
wherein the bag is provided with a connection part to be connected to a fuel suction unit of the internal combustion engine, and
the bag has the connection part connected with the fuel suction unit in a liquid-tight manner, and is configured to collapse as the liquid fuel in the bag decreases.

2. Power work equipment comprising:
a main body having an internal combustion engine; and
a fuel container detachably attached to the main body,
wherein the fuel container includes a bag that is flexible and configured to store liquid fuel to be supplied to the internal combustion engine,
wherein the bag is provided with a connection part to be connected to a fuel suction unit of the internal combustion engine, and
the bag has the connection part connected with the fuel suction unit in a liquid-tight manner, and is configured to collapse as the liquid fuel in the bag decreases.

3. The power work equipment as claimed in claim 2, wherein
the fuel suction unit includes a positive-displacement pump.

4. The power work equipment as claimed in claim 3, wherein
the positive-displacement pump is driven by the internal combustion engine.

5. The power work equipment as claimed in claim 4, wherein
the positive-displacement pump is driven with a suctioning action generated by the internal combustion engine.

6. The power work equipment as claimed in claim 5, wherein
the positive-displacement pump is a diaphragm carburetor driven by the internal combustion engine to generate a suctioning action.

7. The power work equipment as claimed in any one of claims 2 to 6, wherein
the internal combustion engine is configured to be driven with the liquid fuel mixed with lubricating oil, and
the bag of the fuel container is filled with the liquid fuel mixed with the lubricating oil.

8. The power work equipment as claimed in any one of claims 2 to 7, wherein
the fuel container includes a case housing the bag, wherein the case is detachably attached to the main body.

9. The power work equipment as claimed in any one of claims 2 to 8, wherein
the fuel container is juxtaposed to the fuel suction unit and arranged in a space next to a crankcase portion of the internal combustion engine.

10. The power work equipment as claimed in any one of claims 2 to 8, wherein
the fuel container is juxtaposed to the fuel suction unit and arranged in a space next to a cylinder of the internal combustion engine.

11. The power work equipment as claimed in any one of claims 2 to 8, wherein the bag is provided at one end thereof with the connection part, and
the connection part is positioned lower than the upper end of the bag when the power work equipment is not operated.

12. The power work equipment as claimed in any one of claims 2 to 8, wherein
the bag is provided at one end thereof with the connection part, and
the fuel container is attached to the main body so that the liquid fuel in the bag flows downward when the power work equipment is not operated.

13. Power work equipment comprising:
a main body having a drive source; and
a lubricating oil container detachably attached to the main body,
wherein the lubricating oil container includes a bag that is flexible and configured to store lubricating oil for lubricating a sliding portion of the power work equipment,
wherein the bag is provided with a connection part to be connected to a lubricating-oil suction unit of the drive source, and
the bag has the connection part connected with the lubricating-oil suction unit in a liquid-tight manner, and is configured to collapse as the lubricating oil in the bag decreases.

14. The power work equipment as claimed in claim 13, wherein
the lubricating-oil suction unit includes a positive-displacement pump.

15. The power work equipment as claimed in claim 14, wherein
the positive-displacement pump is driven by the drive source.
